# EUROPEAN PATENT SPECIFICATION

(11) **EP 3 316 354 B1**
(45) Date of publication and mention of the grant of the patent: **14.08.2019**
(21) Application number: 17192878.1
(22) Date of filing: 25.09.2017
(51) Int. Cl.: H01M 4/13, H01M 4/66, H01M 10/04, H01M 10/42

(54) **SECONDARY BATTERY MANUFACTURED BY ARRANGEMENT SIMULTANEOUSLY POSSESSING ADVANTAGES SPECIFIC TO WINDING PROCESS AND ADVANTAGES SPECIFIC TO STACKING PROCESS**
DURCH GRUPPIERUNG HERGESTELLTE SEKUNDÄRBATTERIE, DIE GLEICHZEITIG VORTEILE FÜR WICKLUNGSVERFAHREN UND VORTEILE FÜR STAPELUNGSVERFAHREN AUFWEIST
BATTERIE SECONDAIRE FABRIQUÉE PAR AGENCEMENT PRÉSENTANT SIMULTANÉMENT DES AVANTAGES SPÉCIFIQUES AU PROCESSUS DE BOBINAGE ET DES AVANTAGES SPÉCIFIQUES AU PROCESSUS D'EMPILAGE

(30) Priority: 28.10.2016 TW 105135444; 28.04.2017 US 201715581235
(43) Date of publication of application: 02.05.2018
(73) Proprietor: Lumimodule Optical Corporation, Taipei (TW)
(72) Inventor: Shen, Meng-Wei, Taipei (TW)
(74) Representative: Strehl Schübel-Hopf & Partner

(56) References cited:
- US-A- 5 534 369
- US-A- 5 776 628
- US-A1- 2001 018 147
- US-A1- 2011 217 577

## Description

### BACKGROUND OF THE INVENTION

### 1. Field of the Invention:

The present invention relates to a secondary battery manufactured by an arrangement simultaneously possessing advantages specific to a conventional winding process and advantages specific to a conventional stacking process.

### 2. Description of Related Art:

There are a variety of secondary batteries including 18650 battery, 22650 battery, 40135 battery and aluminum soft pack battery, and two types of packaging processes, which are a winding process and a stacking process, are commonly seen for packing the above-mentioned secondary batteries.

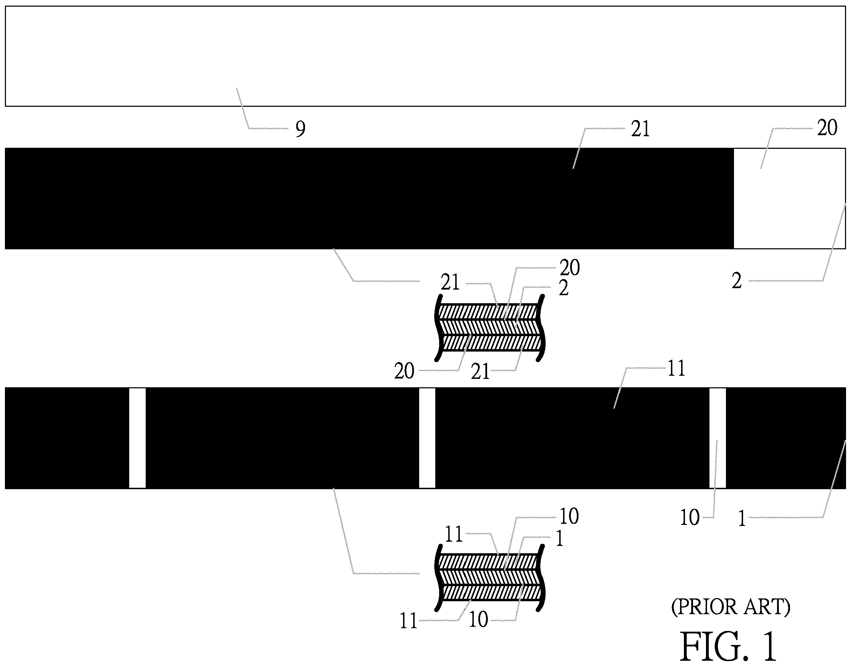

As shown in FIG. 1, for a secondary battery manufactured by utilizing the winding process, a separation film 9 will be disposed between two aluminum foils 1, 2 having respective surfaces 10, 20 coated separately with a positive terminal material 11 and a negative terminal material 21, and then the aluminum foils 1, 2 with the separation film 9 therebetween will be wound into a cylindrical shape or a rectangular shape or a square shape for forming a cylindrical secondary battery (such as 18650 battery, 22650 battery or 40135 battery) or an aluminum soft pack secondary battery.

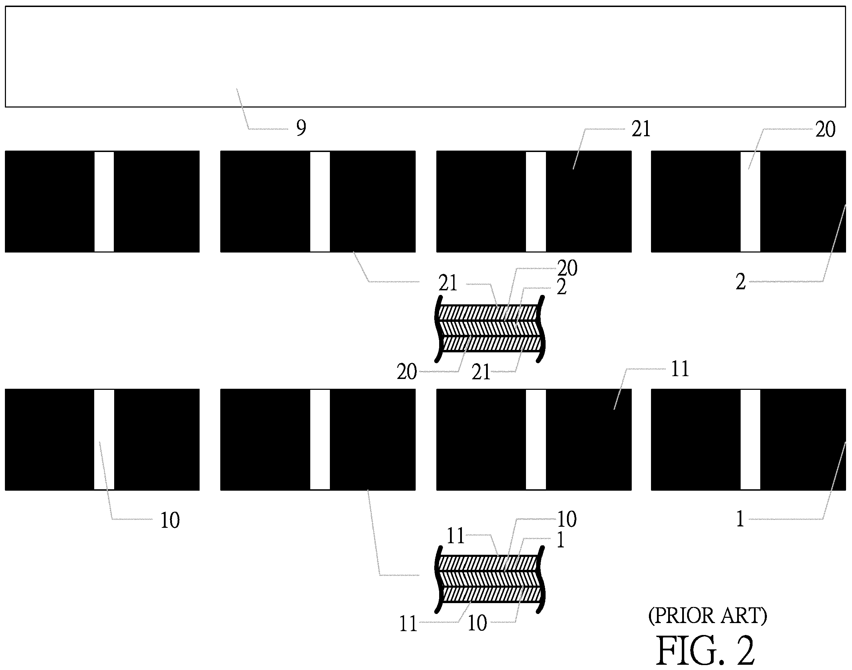

As shown in FIG. 2, for a secondary battery manufactured by utilizing the stacking process, a separation film 9 will be used to separate each pair of an aluminum foil 1 and an aluminum foil 2, and a plurality of aluminum foils 1, 2 having surfaces 10, 20 coated with an anode material 11 and a cathode material 21 respectively will be interlaced with each other with the separation film 9 folded therebetween, thereby forming an aluminum soft pack secondary battery.

The advantages of the winding process are that the automated production thereof is very efficient, the produced battery's size is relatively small and the battery's heat dissipating performance is good. However, the battery's charging/discharging current is very small.

The advantage of the stacking process is that the produced battery's charging/discharging current is large. However, the automated production thereof is slow, the produced battery's size is relatively bigger and the heat dissipating performance is poor.

In view of the pros and cons mentioned above, the applicant of the present invention has devoted to improving the secondary batteries and has achieved a secondary battery manufactured by an arrangement simultaneously possessing advantages specific to the conventional winding process and advantages specific to the conventional stacking process.

US 5,534,369 discloses a battery ensuring safety against short-circuiting comprising a positive electrode and negative electrode and a separator sandwiched therebetween.

US 2011/217577 A1 discloses a lithium secondary battery comprising an electrode assembly of negative electrodes and positive electrodes and a separator interposed therebetween.

US 5,776,628 discloses a multi-plate, flat-folded electrode assembly.

US 2001/018147 A1 a secondary cell having a rolled-up electrode unit housed in a cell can and comprising a positive electrode and a negative electrode each formed by coating a surface of a strip-like current collector with an electrode material.

### SUMMARY OF THE INVENTION

An objective of the present invention is to provide a secondary battery, which comprises:
a first aluminum foil having a surface coated with a positive terminal material, and a plurality of first notches being formed at first preset locations along a length of the first aluminum foil, each of the first notches having a depth ranging from one half to three fourths of a width of the first aluminum foil, each of the first notches being covered by a first adhesive tape adhered with the first aluminum foil, thereby preventing the first aluminum foil from being cracked along the first notches while being pulled, and a plurality of first electrode lugs being provided along the length of the first aluminum foil at locations different from the first preset locations of the first notches, all the first electrode lugs being connected in parallel to serve as a positive terminal of the secondary battery for increasing a charging/discharging current;
a second aluminum foil having a surface coated with a negative terminal material, and a plurality of second notches being formed at second preset locations along a length of the second aluminum foil, each of the second notches having a depth ranging from one half to three fourths of a width of the second aluminum foil, each of the second notches being covered by a second adhesive tape adhered with the second aluminum foil, thereby preventing the second aluminum foil from being cracked along the second notches while being pulled, and a plurality of second electrode lugs being provided along the length of the second aluminum foil at locations different from the second preset locations of the second notches, all the second electrode lugs being connected in parallel to serve as a negative terminal of the secondary battery for increasing the charging/discharging current;
a separation film being placed between the first aluminum foil and the second aluminum foil to form a trilayer structure, the trilayer structure being wound into a predetermined shape;
a case for accommodating and sealing the trilayer structure in the predetermined shape; and
an electrolyte filled in the case.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic view illustrating main components of a secondary battery manufactured by a conventional winding process, wherein aluminum foils thereof are respectively coated with a positive terminal material and a negative terminal material.
FIG. 2 is a schematic view illustrating main components of a secondary battery manufactured by a conventional stacking process, wherein aluminum foils thereof are respectively coated with a positive terminal material and a negative terminal material.
FIG. 3 is a schematic view illustrating main components for manufacturing a secondary battery by using an arrangement simultaneously possessing advantages specific to a conventional winding process and advantages specific to a conventional stacking process (not according to the invention), wherein aluminum foils thereof are respectively coated with a positive terminal material and a negative terminal material.
FIG. 4 is a schematic view illustrating main components for manufacturing a secondary battery by using an arrangement simultaneously possessing advantages specific to a conventional winding process and advantages specific to a conventional stacking process according to the present invention, wherein aluminum foils thereof are respectively coated with a positive terminal material and a negative terminal material.
FIG. 5 is a schematic view illustrating an alternative embodiment of the present invention.
FIG. 6 and FIG. 7 illustrate another alternative embodiment of the present invention.
FIG. 8 and FIG. 9 illustrate still another alternative embodiment of the present invention.

### DETAILED DESCRIPTION OF THE PREFERRED EMBODIMENT

In the detailed descriptions of preferred embodiments hereinafter, same or similar elements are represented by like reference numerals and redundant detailed descriptions will be omitted. Besides, to clearly disclose the characteristics of the present invention, the elements in the figures are not drawn to scale.

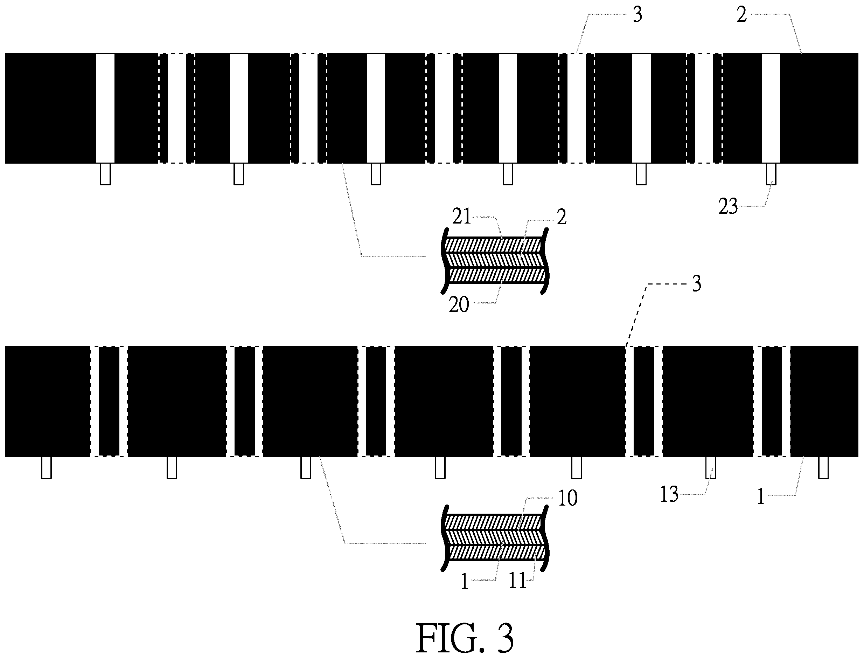

Please refer to FIG. 3, which is a schematic view illustrating main components for manufacturing a secondary battery by an arrangement simultaneously having advantages specific to a conventional winding process and advantages specific to a conventional stacking process (not according to the present invention).

As shown in FIG. 3, an elongated aluminum foil is adopted and cut for forming a plurality of aluminum foils 1 respectively having a surface 10 coated with a positive terminal material 11. Each of the aluminum foils 1 is connected with an adjacent aluminum foil 1 via an adhesive tape 3 to form a first interconnected foil layer, and a preset gap is kept between each two adjacent aluminum foils 1. Another elongated aluminum foil is adopted and cut for forming a plurality of aluminum foils 2 respectively having a surface 20 coated with a negative terminal material 21. Each of the aluminum foils 2 is connected with an adjacent aluminum foil 2 via the adhesive tape 3 to form a second interconnected foil layer, and a preset gap is kept between each two adjacent aluminum foils 2. A separation film (as shown in FIG. 1) is then disposed between the first interconnected foil layer and the second interconnected foil layer to form a trilayer structure, and the trilayer structure can be wound into a cylindrical shape or a rectangular shape according to actual needs and sealed in a cylindrical case or a rectangular case with an electrolyte filled therein, thereby forming a cylindrical secondary battery (such as 18650 battery, 22650 battery or 40135 battery) or an aluminum soft pack secondary battery. As a result, the secondary battery manufactured according to the above-mentioned arrangement will simultaneously possess the advantages specific to the conventional winding process and the advantages specific to the conventional stacking process, thereby providing a charging rate ranging from 5C to 20C and a discharging rate ranging from 15C to 60C.

It is to be noted that the case is not limited to the above-mentioned cylindrical shape, but can be formed in any suitable geometric shape. Also, the aluminum soft pack case is not limited to the above-mentioned rectangular shape, but can be in any suitable geometric shape.

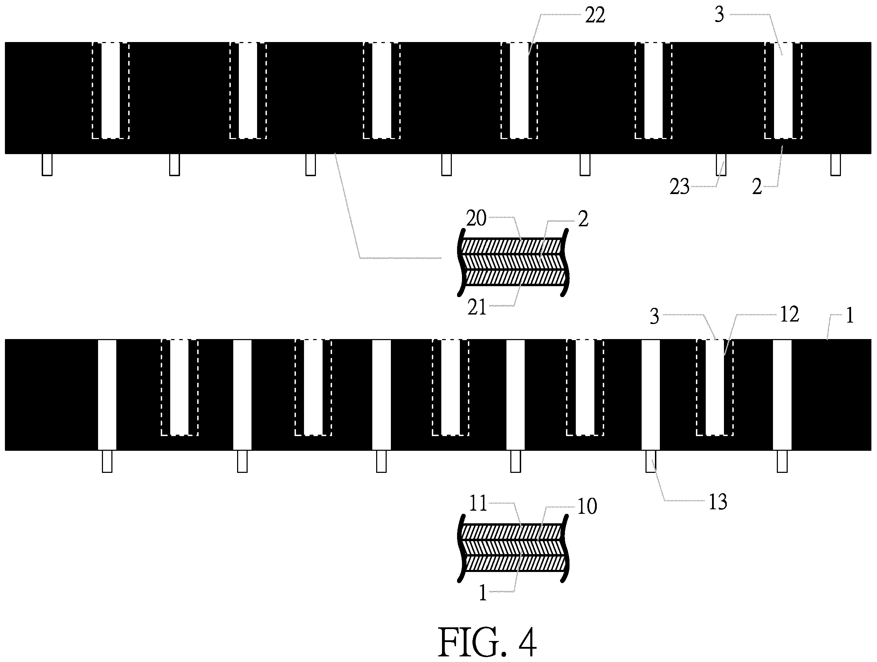

Please refer to FIG. 4, which is a schematic view illustrating main components for manufacturing a secondary battery by an arrangement simultaneously having advantages specific to the conventional winding process and advantages specific to the conventional stacking process according to the present invention.

As shown in FIG. 4, an aluminum foil 1 having a surface 10 coated with a positive terminal material 11 is formed with a plurality of notches 12 at preset locations along a length of the aluminum foil 1, and the notches 12 have a depth ranging from one half to three fourths of a width of the aluminum foil 1. Each of the notches 12 is covered by an adhesive tape 3 adhered with the aluminum foil 1, thereby preventing the aluminum foil 1 from being cracked along the notches 12 while being pulled. In addition, an aluminum foil 2 having a surface 20 coated with a negative terminal material 21 is formed with a plurality of notches 22 at preset locations along a length of the aluminum foil 2, and the notches 22 have a depth ranging from one half to three fourths of a width of the aluminum foil 2. Each of the notches 22 is covered by an adhesive tape 3 adhered with the aluminum foil 2, thereby preventing the aluminum foil 2 from being cracked along the notches 22 while being pulled.

A separation film (as shown in FIG. 1) is then disposed between the aluminum foil 1 and the aluminum foil 2 to form a trilayer structure, and the trilayer structure can be wound into a cylindrical shape or a rectangular shape and sealed in a cylindrical case or a rectangular case with an electrolyte filled therein to form a cylindrical secondary battery (such as 18650 battery, 22650 battery or 40135 battery) or an aluminum soft pack secondary battery. As a result, the secondary battery manufactured according to the above-mentioned arrangement will simultaneously possess the advantages specific to the conventional winding process and the advantages specific to the conventional stacking process, thereby providing a charging rate ranging from 5C to 20C and a discharging rate ranging from 15C to 60C.

It is to be noted that, same as the possible variations mentioned in the description of the embodiment in FIG. 3, the case is not limited to the above-mentioned cylindrical shape, but can be formed in any suitable geometric shape. Also, the aluminum soft pack is not limited to the above-mentioned rectangular shape, but can be in any suitable geometric shape.

Moreover, it is to be noted that the embodiments disclosed in FIG. 3 and FIG. 4 both have a feature, which is: a plurality of electrode lugs (electrode terminal metal pieces) 13, 23 are respectively provided in each of the aluminum foils 1, 2, so that a plurality of positive electrodes can be connected in parallel and a plurality of negative electrodes can be connected in parallel to increase a charging or discharging current I_{T} = I₁ + I₂ + .....+ Iₙ, where n is a positive integer.

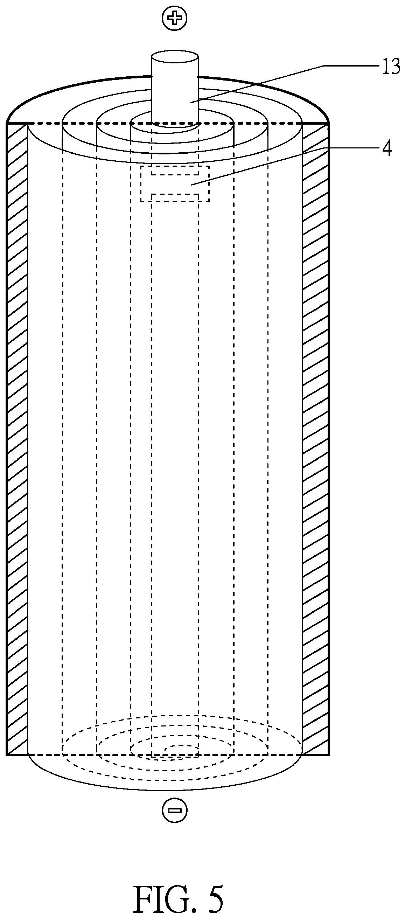

Please refer to FIG. 5, which is a schematic view illustrating an alternative embodiment of the present invention. As shown in FIG. 5, a temperature control switch 4 is disposed on an electrode lug 13 of the battery of the present invention. The temperature control switch 4 has a threshold temperature, for example under 300 Celsius degrees. When the battery is overly charged or overly discharged to cause the temperature of the battery to go up to reach the threshold temperature (120 Celsius degrees for example), the temperature control switch 4 will switch off to disrupt a current loop between the battery and a load, so that the output power (a product of an output current and an output voltage) of the battery can be decreased to zero to protect the battery from bursting or burning due to high temperatures.

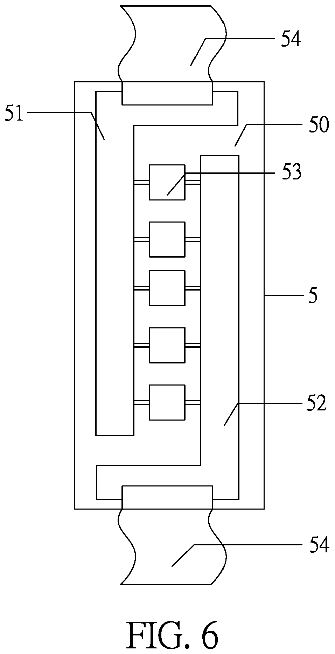

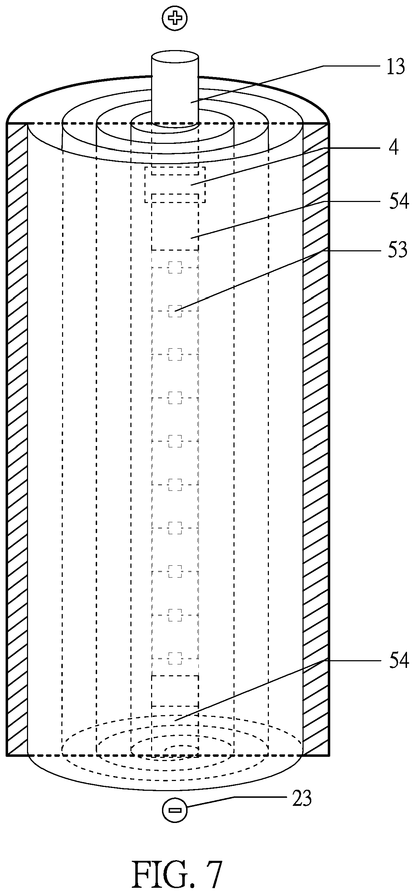

Please refer to FIG. 6 and FIG. 7, which are schematic views illustrating another alternative embodiment of the present invention. As shown in FIG. 6, a super capacitor substrate 5 is provided. The super capacitor substrate 5 includes a substrate 50, a first copper foil 51 electrically connected with the electrode lugs 13 of the battery through a metal sheet 54 (as shown in FIG. 7) or another equivalent conductive means, a second copper foil 52 electrically connected with the electrode lugs 23 of the battery through the another metal sheet 54 (as shown in FIG. 7) or another equivalent conductive means, and at least one capacitor 53 electrically connected with the first copper foil 51 and the second copper foil 52. In this embodiment, the super capacitor substrate 5 includes a plurality of capacitors 53. As shown in FIG. 7, the super capacitor substrate 5 is disposed at the center of a cylindrical battery thereby preventing the battery from being damaged by an inrushing current/voltage, and the super capacitor substrate 5 can also increase a power factor when used in driving a load.

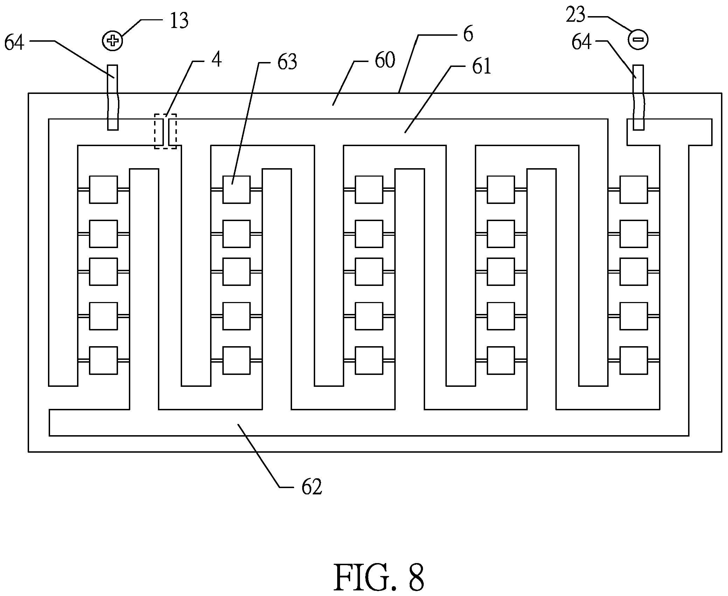

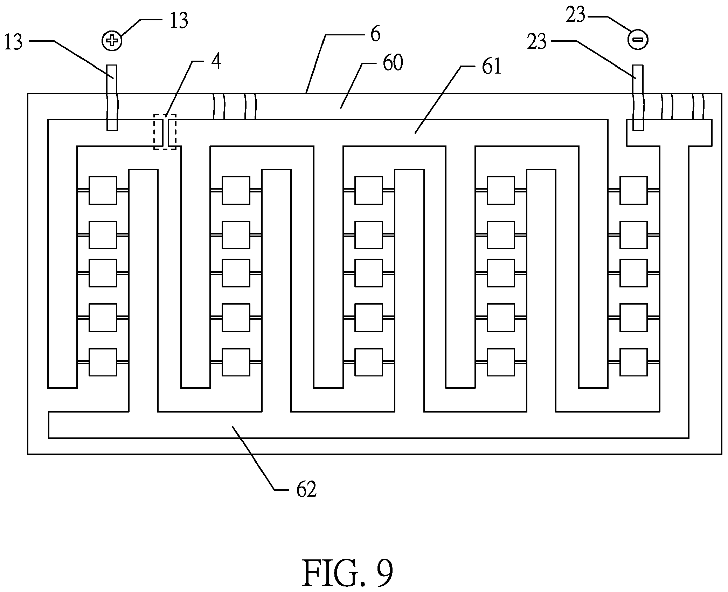

Please refer to FIG. 8 and FIG. 9, which are schematic views illustrating still another alternative embodiment of the present invention. As shown in FIG. 8, a super capacitor substrate 6 similar to the super capacitor substrate 5 disclosed in FIG. 6 and FIG. 7 is provided. The super capacitor substrate 6 includes a substrate 60, a first copper foil 61 electrically connected with the electrode lugs 13 of the battery through a metal sheet 64 (as shown in FIG. 9) or another equivalent conductive means, a second copper foil 62 electrically connected with the electrode lugs 23 of the battery through the another metal sheet 64 (as shown in FIG. 9) or another equivalent conductive means, and at least one capacitor 63 electrically connected between the first copper foil 61 and the second copper foil 62. In this embodiment, the super capacitor substrate 6 includes a plurality of capacitors 63. As shown in FIG. 9, the super capacitor substrate 6 is disposed at a center of a rectangular battery thereby preventing the battery from being damaged by an inrushing current/voltage, and the capacitor substrate 6 can also increase a power factor when used in driving a load.

## Claims

1. A secondary battery, comprising:
a first aluminum foil (1) having a surface (10) coated with a positive terminal material (11), and a plurality of first notches (12) being formed at first preset locations along a length of the first aluminum foil (1), each of the first notches (12) having a depth ranging from one half to three fourths of a width of the first aluminum foil (1), each of the first notches (12) being covered by a first adhesive tape (3) adhered with the first aluminum foil (1), thereby preventing the first aluminum foil (1) from being cracked along the first notches (12) while being pulled, and a plurality of first electrode lugs (13) being provided along the length of the first aluminum foil (1) at locations different from the first preset locations of the first notches (12), all the first electrode lugs (13) being connected in parallel to serve as a positive terminal of the secondary battery for increasing a charging/discharging current;
a second aluminum foil (2) having a surface (20) coated with a negative terminal material (21), and a plurality of second notches (22) being formed at second preset locations along a length of the second aluminum foil (2), each of the second notches (22) having a depth ranging from one half to three fourths of a width of the second aluminum foil (2), each of the second notches (22) being covered by a second adhesive tape (3) adhered with the second aluminum foil (2), thereby preventing the second aluminum foil (2) from being cracked along the second notches (22) while being pulled, and a plurality of second electrode lugs (23) being provided along the length of the second aluminum foil (2) at locations different from the second preset locations of the second notches (22), all the second electrode lugs being connected in parallel to serve as a negative terminal of the secondary battery for increasing the charging/discharging current;
a separation film disposed between the first aluminum foil (1) and the second aluminum foil (2) to form a trilayer structure, the trilayer structure being wound into a predetermined shape;
a case for accommodating and sealing the trilayer structure in the predetermined shape; and
an electrolyte filled in the case.

2. The secondary battery as claimed in claim 1, wherein the case is formed in a cylindrical shape.

3. The secondary battery as claimed in claim 1, wherein the case is formed in a rectangular shape.

4. The secondary battery as claimed in claim 1, wherein the case is formed in a geometric shape.

5. The secondary battery as claimed in claim 1, further including a temperature control switch (4) disposed on the positive terminal, the temperature control switch (4) having a threshold temperature not larger than 300 Celsius degrees, wherein, when the secondary battery is overly charged or overly discharged to cause an ambient temperature of the secondary battery to go up to reach the threshold temperature, the temperature control switch (4) will switch off to disrupt a current loop between the secondary battery and a load.

6. The secondary battery as claimed in claim 1, further including a super capacitor substrate (6) disposed at a center of the secondary battery, the super capacitor substrate (6) includes: a substrate (60); a first copper foil (61) electrically connected with the first electrode lugs (13) through a first metal sheet (64) or another equivalent conductive means; a second copper foil (62) electrically connected with the second electrode lugs (23) through a second metal sheet (64) or another equivalent conductive means; and at least one capacitor (63) electrically connected between the first copper foil (61) and the second copper foil (62), thereby preventing the secondary battery from being damaged by an inrushing current/voltage, and thereby increasing a power factor when the secondary battery is used in driving a load.

7. The secondary battery as claimed in claim 1, wherein the positive terminal material (11) and the negative terminal material (21) are implemented by a liquid state, solid state or semi-solid state gel-like material made of a metal oxide mixed with an acid or alkaline surfactant and an alcohol member.

## Patentansprüche

1. Sekundärbatterie, umfassend:
eine erste Aluminiumfolie (1) mit einer Oberfläche (10), die mit einem Pluspol-Material (11) beschichtet ist, wobei eine Vielzahl von ersten Kerben (12) an ersten vorgegebenen Stellen entlang einer Länge der ersten Aluminiumfolie (1) ausgebildet sind, wobei jede der ersten Kerben (12) eine Tiefe im Bereich von der Hälfte bis drei Vierteln der Breite der ersten Aluminiumfolie (1) aufweist, wobei jede der ersten Kerben (12) mit einem ersten Haftband (3) abgedeckt ist, das mit der ersten Aluminiumfolie (1) verklebt ist, wodurch verhindert wird, dass die erste Aluminiumfolie (1) beim Ziehen entlang der ersten Kerben (12) reißt, und eine Vielzahl von ersten Elektrodenlaschen (13), die entlang der Länge der ersten Aluminiumfolie (1) an anderen Stellen vorgesehen sind, die von den ersten vorgegebenen Stellen der ersten Kerben (12) verschieden sind, wobei alle ersten Elektrodenlaschen (13) parallel angeschlossen sind, um als Pluspol der Sekundärbatterie zu dienen, um einen Lade-/Entladestroms zu erhöhen;
eine zweite Aluminiumfolie (2) mit einer Oberfläche (20), die mit einem Minuspol-Material (21) beschichtet ist, wobei eine Vielzahl von zweiten Kerben (22) an zweiten vorgegebenen Stellen entlang einer Länge der zweiten Aluminiumfolie (2) ausgebildet sind, wobei jede der zweiten Kerben (22) eine Tiefe im Bereich von der Hälfte bis drei Vierteln der Breite der zweiten Aluminiumfolie (2) aufweist, wobei jede der zweiten Kerben (22) durch ein zweiten Haftband (3) bedeckt ist, das mit der zweiten Aluminiumfolie (2) verklebt ist, wodurch verhindert wird, dass die zweite Aluminiumfolie (2) beim Ziehen entlang der zweiten Kerben (22) reißt, und eine Vielzahl von zweiten Elektrodenlaschen (23) entlang der Länge der zweiten Aluminiumfolie (2) an anderen Stellen vorgesehen sind, die von den zweiten vorgegebenen Stellen der zweiten Kerben (22) verschieden sind, wobei alle zweiten Elektrodenlaschen parallel angeschlossen sind, um als Minuspol der Sekundärbatterie zu dienen, um den Lade-/Entladestrom zu erhöhen;
eine Trennfolie, die zwischen der ersten Aluminiumfolie (1) und der zweiten Aluminiumfolie (2) angeordnet ist, sodass eine Dreischichtstruktur gebildet wird, wobei die Dreischichtstruktur zu einer vorbestimmten Form gewickelt ist;
ein Gehäuse zur Aufnahme und Abdichtung der Dreischichtstruktur in der vorgegebenen Form; und
einen in das Gehäuse eingefüllten Elektrolyten.

2. Sekundärbatterie nach Anspruch 1, wobei das Gehäuse zylindrisch ausgebildet ist.

3. Sekundärbatterie nach Anspruch 1, wobei das Gehäuse rechteckig ausgebildet ist.

4. Sekundärbatterie nach Anspruch 1, wobei das Gehäuse in einer geometrischen Form gebildet ist.

5. Sekundärbatterie nach Anspruch 1, welche weiterhin einen Temperaturkontrollschalter (4) aufweist, der sich an dem Pluspol befindet, wobei der Temperaturkontrollschalter (4) eine Schwellentemperatur von nicht mehr als 300 Grad Celsius aufweist, wobei, wenn die Sekundärbatterie derart übermäßig geladen oder übermäßig entladen ist/wird, dass die Umgebungstemperatur der Sekundärbatterie bis zum Erreichen der Schwellentemperatur ansteigt, der Temperaturkontrollschalter (4) abschaltet, um eine Stromschleife zwischen der Sekundärbatterie und einer Last zu unterbrechen.

6. Sekundärbatterie nach Anspruch 1, die weiterhin ein Superkondensatorsubstrat (6) aufweist, welches in der Mitte der Sekundärbatterie angeordnet ist, wobei das Superkondensatorsubstrat (6) Folgendes beinhaltet: ein Substrat (60); eine erste Kupferfolie (61), die über einen ersten Metallstreifen (64) oder ein anderes gleichwertiges leitfähiges Mittel elektrisch mit den ersten Elektrodenlaschen (13) verbunden ist; eine zweite Kupferfolie (62), die über einen zweiten Metallstreifen (64) oder ein anderes gleichwertiges leitendes Mittel elektrisch mit den zweiten Elektrodenlaschen (23) verbunden ist; und mindestens einen Kondensator (63), der elektrisch zwischen der ersten Kupferfolie (61) und der zweiten Kupferfolie (62) angeschlossen ist, wodurch verhindert wird, dass die Sekundärbatterie durch einen eintretenden Strom/eine eintretende Spannung beschädigt wird, und dadurch ein Leistungsfaktor erhöht wird, wenn die Sekundärbatterie zum Antreiben einer Last verwendet wird.

7. Sekundärbatterie nach Anspruch 1, wobei da Pluspol-Material (11) und das Minuspol-Material (21) durch einen flüssigen Zustand, festen Zustand oder einen halbfesten Zustand eines gelartigen Materials implementiert ist, gebildet aus einem Metalloxid, das mit einem sauren oder alkalischen Tensid und einem Alkoholbestandteil gemischt ist.

## Revendications

1. Batterie secondaire, comprenant:
une première feuille d'aluminium (1) présentant une surface (10) revêtue avec un matériau de borne positive (11), et une pluralité de premières encoches (12) étant formées à des premiers endroits prédéterminés le long d'une longueur de la première feuille d'aluminium (1), chacune des premières encoches (12) présentant une profondeur comprise dans une gamme s'étendant de la moitié à trois quarts d'une largeur de la première feuille d'aluminium (1), chacune des premières encoches (12) étant recouverte d'un premier ruban adhésif (3) collé à la première feuille d'aluminium (1), empêchant de ce fait la première feuille d'aluminium (1) d'être déchirée le long des premières encoches (12) lorsqu'elle est tirée, et une pluralité de premières languettes d'électrode (13) étant prévues le long de la longueur de la première feuille d'aluminium (1) à des endroits différents des premiers endroits prédéterminés des premières encoches (12), la totalité des premières languettes d'électrode (13) étant connectées en parallèle afin de faire office de borne positive de la batterie secondaire dans le but d'augmenter un courant de charge/décharge;
une seconde feuille d'aluminium (2) présentant une surface (20) revêtue d'un matériau de borne négative (21), et une pluralité de secondes encoches (22) étant formées à des seconds endroits prédéterminés le long d'une longueur de la seconde feuille d'aluminium (2), chacune des secondes encoches (22) présentant une profondeur comprise dans une gamme s'étendant de la moitié à trois quarts d'une largeur de la seconde feuille d'aluminium (2), chacune des secondes encoches (22) étant recouverte d'un second ruban adhésif (3) collé à la seconde feuille d'aluminium (2), empêchant de ce fait la seconde feuille d'aluminium (2) d'être déchirée le long des secondes encoches (22) lorsqu'elle est tirée, et une pluralité de secondes languettes d'électrode (23) étant prévues le long de la longueur de la seconde feuille d'aluminium (2) à des endroits différents des seconds endroits prédéterminés des secondes encoches (22), la totalité des secondes languettes d'électrode étant connectées en parallèle afin de faire office de borne négative de la batterie secondaire dans le but d'augmenter le courant de charge/décharge;
un film de séparation disposé entre la première feuille d'aluminium (1) et la seconde feuille d'aluminium (2) de manière à former une structure à trois couches, la structure à trois couches étant enroulée sous une forme prédéterminée;
un boîtier pour recevoir et isoler la structure à trois couches sous la forme prédéterminée; et
un électrolyte remplissant le boîtier.

2. Batterie secondaire selon la revendication 1, dans laquelle le boîtier est formé avec une forme cylindrique.

3. Batterie secondaire selon la revendication 1, dans laquelle le boîtier est formé avec une forme rectangulaire.

4. Batterie secondaire selon la revendication 1, dans laquelle le boîtier est formé avec une forme géométrique.

5. Batterie secondaire selon la revendication 1, comprenant en outre un commutateur de commande de température (4) disposé sur la borne positive, le commutateur de commande de température (4) présentant un seuil de température non supérieur à 300 degrés Celsius, dans laquelle, lorsque la batterie secondaire est excessivement chargée ou excessivement déchargée au point qu'une température ambiante de la batterie secondaire augmente jusqu'à atteindre le seuil de température, le commutateur de commande de température (4) se coupera afin d'interrompre une boucle de courant entre la batterie secondaire et une charge.

6. Batterie secondaire selon la revendication 1, comprenant en outre un substrat de super-condensateur (6) disposé en un centre de la batterie secondaire, le substrat de super-condensateur (6) comprenant: un substrat (60); une première feuille de cuivre (61) connectée électriquement aux premières languettes d'électrode (13) à travers une première feuille de métal (64) ou un autre moyen conducteur équivalent; une seconde feuille de cuivre (62) connectée électriquement aux secondes languettes d'électrode (23) à travers une seconde feuille de métal (64) ou un autre moyen conducteur équivalent; et au moins un condensateur (63) connecté électriquement entre la première feuille de cuivre (61) et la seconde feuille de cuivre (62), empêchant de ce fait la batterie secondaire d'être endommagée par un(e) courant/tension de démarrage, et augmentant de ce fait un facteur de puissance lorsque la batterie secondaire est utilisée pour entraîner une charge.

7. Batterie secondaire selon la revendication 1, dans laquelle le matériau de borne positive (11) et le matériau de borne négative (21) sont implémentés par un matériau à l'état liquide, à l'état solide ou de type gel à l'état semi-solide constitué d'un oxyde métallique mélangé à un agent tensioactif acide ou alcalin et un élément d'alcool.
